(19) Europäisches Patentamt
European Patent Office
Office européen des brevets

(11) **EP 2 842 990 B1**

(12) **EUROPÄISCHE PATENTSCHRIFT**

(45) Veröffentlichungstag und Bekanntmachung des Hinweises auf die Patenterteilung:
**11.05.2016 Patentblatt 2016/19**

(21) Anmeldenummer: **14001500.9**

(22) Anmeldetag: **21.12.2010**

(51) Int Cl.:
*B29C 47/00* (2006.01)     *B32B 5/32* (2006.01)
*H01M 2/16* (2006.01)     *B32B 27/32* (2006.01)
*C08J 5/18* (2006.01)     *B29C 55/00* (2006.01)
*H01G 11/52* (2013.01)     *B29C 55/14* (2006.01)

(54) **Mikroporöse Folie für Doppelschichtkondensatoren**

Microporous film for double layer capacitors

Feuille micro-poreuse pour condensateurs à double couche

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2009 DE 102009060446**

(43) Veröffentlichungstag der Anmeldung:
**04.03.2015 Patentblatt 2015/10**

(62) Dokumentnummer(n) der früheren Anmeldung(en) nach Art. 76 EPÜ:
**10814722.4 / 2 481 063**

(73) Patentinhaber: **Treofan Germany GmbH & Co. KG**
**66539 Neunkirchen (DE)**

(72) Erfinder:
• **Klein, Dominic**
  **66450 Bexbach (DE)**
• **Busch, Detlef**
  **66740 Saarlouis (DE)**
• **Schmitz, Bertram**
  **57200 Sarreguemines (FR)**

(74) Vertreter: **Kremer, Viola**
**Treofan Germany GmbH & Co. KG**
**Am Prime Parc 17**
**65479 Raunheim (DE)**

(56) Entgegenhaltungen:
EP-A1- 1 369 221     EP-A1- 1 950 821
WO-A1-2009/132801

**Beschreibung**

Die vorliegende Erfindung betrifft eine mikroporöse Folie und ihre Verwendung als Separator in Doppelschichtkondensatoren, sowie ein Verfahren zur Herstellung der Folie.

Elektrochemische Doppelschichtkondensatoren (DSK) erlangen eine zunehmende Bedeutung als ergänzende Energiequelle, welche die Lücke zwischen herkömmlichen Batterien und Kondensatoren schließen, da sie schnell, aber nur für kurze Zeit eine hohe elektrische Leistung zur Verfügung stellen können. Eine solche Leistung wird beispielsweise bei unterbrechungsfreien Stromversorgungen oder in neu entwickelten Hybridfahrzeugen benötigt. Bei Leistungsspitzen, beispielsweise beim Beschleunigen oder beim Starten, kann der Doppelschichtkondensator diese zusätzliche Leistung sehr schnell zur Verfügung zu stellen und damit eine vorhandene Energiequelle unterstützen oder einen vorhanden Generator ergänzen oder einen kurzzeitigen Stromausfall überbrücken, bis ein Notaggregat zeitverzögert gestartet werden kann.

Aufbau und Herstellung der DSK sind mit denen von Lithium-Ionen-Batterien vergleichbar. Die Energiespeicherung in Doppelschichtkondensatoren beruht auf dem Phänomen der elektrochemischen Doppelschicht, der sogenannten Helmholtz-Schicht, die sich an den Elektroden in einer leitenden Flüssigkeit beim Anlegen einer Spannung ausbildet. Ein elektrochemischer Doppelschichtkondensator besteht im wesentlichen aus zwei Elektroden, die in eine Elektrolytlösung eintauchen und die durch den Separator getrennt sind. Die Elektroden sind entweder aus Kohlenstoff aufgebaut oder ein anderes Elektrodenmaterial mit hoher Oberfläche wird beschichtet, beispielsweise eine Metallfolie, die mit einer Kohlenstoffmodifikation überzogen wird. Zwischen den beiden Elektroden ist ein Separator angeordnet, der zur elektrischen Isolation der beiden Elektrodenschichten dient. Dieser Separator muß porös ausgebildet sein und den Elektrolyten aufnehmen. Er muß gleichzeitig für den Elektrolyten, insbesondere für die Ionen, die sich durch Dissoziation des im Elektrolyten gelösten Leitsalzes ausbilden, durchlässig ist. Als Separatoren werden daher poröse Materialien gewählt, beispielsweise aus Papier. Möglich sind jedoch auch Separatoren aus anderen Materialien, beispielsweise Kunststofffolien, Filzen oder Geweben aus Kunststoff- oder Glasfasern.

Eine einfache Kondensatorzelle besteht dabei aus zumindest zwei Elektroden und einer dazwischen liegenden Separatorschicht. Üblicherweise werden zur Erhöhung der Kapazität mehrere Elektrodenlagen und Separatorschichten alternierend übereinander gestapelt, beispielsweise als planarer Stapel oder noch einfacher und platzsparender in Form eines Wickels. Nach dem Herstellen eines Stapels oder Wickels aus Elektroden und Separatorschichten wird dieser in ein Gehäuse eingebracht und anschließend durch eine Imprägnieröffnung mit einem Elektrolyten imprägniert. Bei der Imprägnierung muss der Elektrolyt sämtliche Hohlräume und Poren des Separators und der porösen Elektrodenbeschichtung füllen und darin enthaltenes Gas aus dem Wickel oder Stapel verdrängen. Eine vollständige Imprägnierung ist wichtig, da bei unvollständigem Austausch des Gases gegen den Elektrolyten ein späteres Ausgasen erfolgen kann, welches bei verschlossenem Kondensatorgehäuse im Extremfall zu einem Bersten des Kondensatorgehäuses und damit zu einer Zerstörung des Kondensators führt. Außerdem ist bei einem nicht vollständig mit Elektrolyt getränkten Wickel die Kapazität geringer und der ESR höher.

Die Grösse des Spaltes zwischen den beiden Elektroden wird durch die Dicke des Separators und gegebenenfalls durch eventuell vorhandene Dichtungen bestimmt. Damit die Elektrolyt/Separator-Kombination möglichst wenig zum Innenwiderstand beiträgt, sollte der Separator dünn und sehr porös sein. Außerdem sollte er im gegebenen Elektrolyten eine ausreichende Stabilität zeigen. Verschiedene Materialien werden als Separatoren vorgeschlagen, beispielsweise Glasfaservliese oder Papiere, da diese die Anforderungen bezüglich der hohen Porosität gut erfüllen. Eine hohe Porosität trägt näherungsweise quadratisch zum elektrischen Widerstand bei. Somit kann unter Umständen eine Erhöhung der Porosität effektiver sein als eine Reduktion der Separatordicke. Dieser Optimierung durch hohe Porositäten und geringen Dicken sind jedoch durch die mechanische Stabilität der Separatoren Grenzen gesetzt, da insbesondere bei rauhen, körnigen oder faserigen Elektrodenoberflächen der Separator leicht durchstochen werden kann.

Im EP 1 950 821 A1 wird ein biaxial orientierte, porösen Film beschrieben, dessen Porosität durch Umwandlung von ß-kristallinem Polypropylen beim Verstrecken der Folie erzeugt wird, als Separator für eine Lithium Ion Zelle oder einen Doppelschichtkondensator. WO 2009/132801 A1 beschreibt eine Batterie enthaltend als Separator eine biaxial orientierte, mehrschichtige poröse Folie.

Im Stand der Technik sind grundsätzlich poröse Folien bekannt, die aus Polyolefinen, wie z.B. Polypropylen oder Polyethylen, aufgebaut sind. Diese Materialien werden hauptsächlich als Membranen oder Separatoren in Batterien oder Akkumulatoren eingesetzt. Es sind verschiedene Verfahren bekannt nach denen Polyolefinfolien mit hohen Porositäten hergestellt werden können: Füllstoffverfahren; Kaltverstreckung, Extraktionsverfahren und ß-Kristallitverfahren. Diese Verfahren unterscheiden sich grundsätzlich durch die verschiedenen Mechanismen, durch welche die Poren erzeugt werden.

Beispielsweise können durch den Zusatz von sehr hohen Füllstoffmengen poröse Folien hergestellt werden. Die Poren entstehen beim Verstrecken durch die Unverträglichkeit der Füllstoffe mit der Polymermatrix. In vielen Anwendungen bringen die großen Füllstoffmengen von bis zu 40 Gew.-% unerwünschte Nebenwirkungen mit sich. Beispielsweise ist die mechanische Festigkeit dieser porösen Folien trotz Verstreckung durch die hohen Füllstoffmengen beeinträchtigt.

In den sogenannten Extraktionsverfahren werden die Poren im Prinzip durch Herauslösen einer Komponente aus der Polymermatrix durch geeignete Lösemittel erzeugt. Hier haben sich vielfältige Varianten entwickelt, die sich durch Art der Zusatzstoffe und die geeigneten Lösemittel unterscheiden. Es können sowohl organische als auch anorganische Zusatzstoffe extrahiert werden. Diese Extraktion kann als letzter Verfahrensschritt bei der Herstellung der Folie erfolgen oder mit einer anschließenden Verstreckung kombiniert werden.

Ein älteres aber in der Praxis erfolgreiches Verfahren beruht auf einer Verstreckung der Polymermatrix bei sehr niedrigen Temperaturen (Kaltverstreckung). Hierzu wird die Folie zunächst in üblicher Weise extrudiert und anschließend zur Erhöhung des kristallinen Anteils für einige Stunden getempert. Im nächsten Verfahrensschritt erfolgt die Kalt-Verstreckung in Längsrichtung bei sehr niedrigen Temperaturen, um eine Vielzahl von Fehlstellen in Form kleinster Mikrorisse zu erzeugen. Diese vorgestreckte Folie mit Fehlstellen wird anschließend bei erhöhten Temperaturen mit höheren Faktoren nochmals in die gleiche Richtung verstreckt, wobei die Fehlstellen zu Poren vergrößert werden, die eine netzwerkartige Struktur ausbilden. Diese Folien vereinen hohe Porositäten und gute mechanische Festigkeiten in Richtung ihrer Verstreckung, im allgemeinen die Längsrichtung. Die mechanische Festigkeit in Querrichtung bleibt dabei jedoch mangelhaft, wodurch die Durchstoßfestigkeit schlecht ist und eine hohe Spleißneigung in Längsrichtung entsteht. Insgesamt ist das Verfahren kostenintensiv.

Ein weiteres bekanntes Verfahren zur Herstellung von porösen Folien basiert auf der Zumischung von ß-Nukleierungsmitteln zu Polypropylen. Durch das ß-Nukleierungsmittel bildet das Polypropylen beim Abkühlen der Schmelze sogenannte ß-Kristallite in hohen Konzentrationen. Bei der anschließenden LängsVerstreckung erfolgt eine Umwandlung der ß-Phase in die alpha-Modifikation des Polypropylens. Da sich diese unterschiedlichen Kristallformen in der Dichte unterscheiden, entstehen auch hier zunächst viele mikroskopischen Fehlstellen, die durch die Verstreckung zu Poren aufgerissen werden. Die nach diesem Verfahren hergestellten Folien haben hohe Porositäten und gute mechanische Festigkeiten in Längs- und Querrichtung und eine sehr gute Wirtschaftlichkeit. Diese Folien werden nachstehend auch ß-poröse Folien genannt. Die meisten nach diesem Verfahren hergestellten porösen Folien sind jedoch hinsichtlich der Durchlässigkeit und der mechanischen Eigenschaften nicht gut genug, um den hohen Anforderungen beim Einsatz als Separator in Doppelschichtkondensatoren zu genügen.

Im Rahmen der Untersuchungen zu der vorliegenden Erfindung wurde gefunden, daß auch die Dimensionsstabilität des Separators einen Einfluß auf die Qualität des DSK hat. Insbesondere bei Ausführungen, bei denen der Verbund aus Aluminium (als elektrischer Leiter), Elektrode und Separator zu einem Wickel verarbeitet wird, treten Probleme mit Separatoren auf, die einen zu hohen Schrumpf, insbesondere eine zu hohen Längsschrumpf, aufweisen. Nach der Herstellung des Wickels werden an dessen Stirnseiten Kontaktdrähte an den Elektroden oder den Aluminium-Leiter angeschweißt, weiche den elektrischen Kontakt zum Verbraucher bilden. Hierbei treten Temperaturbelastungen auf, welche zum Schrumpfen des Separators führen können. Infolge der dabei entstehenden Spannungen im Wickel kann es zum Aufreißen des Separators oder zum Durchdrücken von Unebenheiten der Elektroden durch den Separator kommen. Beides führt zu einem Kurzschluß und somit zur Unbrauchbarkeit des Doppelschichtkondensators.

Des weiteren können durch zu hohen Schrumpf des Separators bei der Herstellung des DSK Probleme auftreten, da der Wickel oder der Stapel vor dem Befüllen mit dem Elektrolyten getrocknet wird. Eine intensive Trocknung vor dem Befüllen ist erforderlich, da die eingesetzten Elektroden meistens aus Aktivkohle bestehen, bzw. eine Aktivkohle-Beschichtung aufweisen, welche größere Menge Feuchte absorbiert. Diese Feuchte muß vor dem Befüllen mit Elektrolyt vollständig entfernt werden. Dieses Trocknen erfolgt bei erhöhten Temperaturen, bei denen der Separator dimensionsstabil bleiben muß.

Mikroporöse Polypropylen-Folien, die mit Hilfe von ß-Nukleierungsmitteln hergestellt werden, weisen in der Regel hohe Schrumpfwerte auf und gelten daher für die Anwendung in einem DSK als generell ungeeignet. Die speziellen Verfahrensbedingungen, die zur Erzeugung der Poren eingehalten werden müssen, führen gleichzeitig zu einer hohen Orientierung der Polymermatrix, womit ein hoher Schrumpf einher geht. Dieses Problem tritt verstärkt bei Folien mit hohen Porositäten auf, da die Porosität durch Verstreckung bei besonders niedrigen Temperaturen und/oder durch die Anwendung möglichst hoher Streckfaktoren verbessert werden kann. Diese Bedingungen führen aber gerade zu einer weiteren Erhöhung des Schrumpfs, so daß trotz Verbesserung der Porosität diese Folien letztlich zum Einsatz als Separator in einem DSK unbrauchbar sind.

Die Aufgabe der vorliegenden Erfindung bestand daher darin, eine poröse Folie, bzw. einen Separator für Doppelschichtkondensatoren zur Verfügung zu stellen und die Gebrauchseigenschaften des Doppelschichtkondensators zu verbessern.

Überraschenderweise ist es möglich eine mikroporöse Folie aus Polypropylen zur Verfügung zu stellen, die sowohl eine sehr hohe Porosität, eine hohe Durchlässigkeit und einen niedrigen Schrumpf aufweist und damit ein Eigenschaftsprofil hat, wie es für einen Separator in einem DSK gefordert ist.

Die der Erfindung zugrundeliegende Aufgabe wird somit gelöst durch eine biaxial orientierte, ein- oder mehrschichtige mikroporöse Folie, deren Mikroporosität durch Umwandlung von ß-kristallinem Polypropylen beim Verstrecken der Folie erzeugt wird, welche mindestens eine poröse Schicht umfasst, die Propylenhomopolymer und/oder Propylen-Blockcopolymer und ß-Nukleierungsmittel enthält, wobei die poröse Folie einen Gurley Wert von <400s und in Längsrichtung bei 100°C/1 Stunde einen Schrumpf von <5% und einen Querschrumpf bei 100°C/1 Stunde von <10% hat.

Überraschenderweise ist es möglich eine ß-poröse Folie mit sehr hohe Porositäten und hohen Durchlässigkeit von <400s zur Verfügung zu stellen, welche sich gleichzeitig durch hervorragend niedrige Schrumpfwerte auszeichnet und damit für den Einsatz als Separator im DSK besonders geeignet ist. Der Gurley Wert der erfindungsgemäße Folie liegt im allgemeinen in einem Bereich von <400s, vorzugsweise 50 bis 300s, insbesondere 100 bis 250s.

Es wurde im Rahmen der vorliegenden Erfindung überraschend gefunden, daß es möglich ist die hohe Orientierung der Polymermatrix, die bei der Erzeugung der Poren in die Folie eingebracht wird und den damit einher gehenden Schrumpf durch besondere Maßnahmen wieder abzubauen, ohne daß dabei die wünschenswerten hohen Porositäten beeinträchtigt werden. Darüber hinaus zeichnet sich die Folie zusätzlich durch wünschenswerte hohe mechanische Festigkeiten aus. So beträgt der E-Modul der erfindungsgemäßen Folie in Längsrichtung im allgemeinen 300 bis 1800 N/mm2, vorzugsweise 400 bis 1500 N/mm2, insbesondere 600 bis 1200 N/mm2 und in Querrichtung 500 bis 3000 N/mm2, vorzugsweise 800 bis 2500 N/mm2, insbesondere 1000 bis 2200 N/mm2.

Die erfindungsgemäße Folie umfaßt mindestens eine poröse Schicht, die aus Proyplenhomopolymer und/oder Propylenblockcopolymeren aufgebaut ist und $\beta$-Nukleierungsmittel enthält. Gegebenenfalls können zusätzlich andere Polyolefine in geringen Mengen enthalten sein, soweit sie die Porosität, Schrumpf, Durchlässigkeit und andere wesentliche Eigenschaften nicht nachteilig beeinflussen. Des weiteren enthält die mikroporöse Schicht gegebenenfalls zusätzlich übliche Additive, beispielsweise Stabilisatoren, Neutralisationsmittel in jeweils wirksamen Mengen.

Geeignete Propylenhomopolymeren enthalten 98 bis 100 Gew.-%, vorzugsweise 99 bis 100 Gew.-% Propyleneinheiten und besitzen einen Schmelzpunkt (DSC) von 150°C oder höher, vorzugsweise 155 bis 170°C, und im allgemeinen einen Schmelzflußindex von 0,5 bis 10 g/10 min, vorzugsweise 2 bis 8 g/10 min, bei 230°C und einer Kraft von 2,16 kg (DIN 53735). Isotaktische Propylenhomopolymere mit einem n-heptan löslichen Anteil von unter 15 Gew.-%, vorzugsweise 1 bis 10 Gew.-%, stellen bevorzugte Propylenhomopolymere für die Schicht dar. Vorteilhaft können auch isotaktische Propylenhomopolymere mit einer hohen Kettenisotaktizität von mindestens 96%, vorzugsweise 97 - 99% ($^{13}$C-NMR; Triaden Methode) eingesetzt werden. Diese Rohstoffe sind als HIPP (Hoch isotaktische Polypropylene) oder HCPP (Hoch Kristalline Polypropylene) Polymere im Stand der Technik bekannt und zeichnen sich durch eine hohe Stereoregularität der Polymerketten, höhere Kristallinität und einen höheren Schmelzpunkt aus (im Vergleich zu Propylenpolymeren mit einer $^{13}$C-NMR-Isotaktizität von 90 bis <96%, die gleichfalls eingesetzt werden können).

Propylen-Blockcopolymere haben einen Schmelzpunkt von über 140 bis 170°C, vorzugsweise von 145 bis 165°C, insbesondere 150 bis 160°C und einen Schmelzebereich der bei über 120°C, vorzugsweise in einem Bereich von 125 - 140°C beginnt. Der Comonomer-, vorzugsweise Ethylen-Gehalt liegt beispielsweise zwischen 1 und 20 Gew.-%, bevorzugt 1 und 10 Gew.-%. Der Schmelzflußindex der Propylen-Blockcopolymere liegt im allgemeinen in einem Bereich von 1 bis 20 g/10min, vorzugsweise 1 bis 10 g/10min.

Gegebenenfalls kann die poröse Schicht zusätzlich andere Polyolefine enthalten, soweit sie die Eigenschaften, insbesondere die Porosität und die mechanischen Festigkeiten und die Durchlässigkeit, nicht negativ beeinflussen. Andere Polyolefine sind beispielsweise statistische Copolymere von Ethylen und Propylen mit einem Ethylengehalt von 20 Gew.-% oder weniger, statistische Copolymere von Propylen mit $C_4$-$C_8$-Olefinen mit einem Olefingehalt von 20 Gew.-% oder weniger, Terpolymere von Propylen, Ethylen und Butylen mit einem Ethylengehalt von 10 Gew.-% oder weniger und mit einem Butylengehalt von 15 Gew.-% oder weniger, oder Polyethylene, wie beispielsweise LDPE, VLDPE, und LLDPE.

Als ß-Nukleierungsmittel sind für die poröse Schicht grundsätzlich alle bekannten Zusatzstoffe geeignet, welche die Bildung von ß-Kristallen des Polypropylens beim Abkühlen einer Polypropylenschmelze fördern. Derartige ß-Nukleierungsmittel, als auch ihre Wirkungsweise in einer Polypropylenmatrix, sind an sich im Stand der Technik bekannt und werden nachstehend im Einzelnen beschrieben.

Von Polypropylen sind verschiedene kristalline Phasen bekannt Beim Abkühlen einer Schmelze bildet sich üblicherweise überwiegend das $\alpha$-kristalline PP, dessen Schmelzpunkt bei ca. 158 - 162 °C liegt. Durch eine bestimmte Temperaturführung kann beim Abkühlen der Schmelze ein geringer Anteil an ß-kristalliner Phase erzeugt werden, welche gegenüber der monoklinen $\alpha$-Modifikation mit 148-150°C einen deutlich niedrigeren Schmelzpunkt aufweist. Im Stand der Technik sind Additive bekannt, die zu einem erhöhten Anteil der ß-Modifikation beim Abkühlen des Polypropylens führen, beispielsweise $\gamma$-Quinacridone, Dihydroquinacridine oder Calciumsalze der Phtalatsäure.

Für die Zwecke der vorliegenden Erfindung werden vorzugsweise hochaktive ß-Nukleierungsmittel eingesetzt, welche beim Abkühlen einer Propylenhomo-polymerschmelze (PP-Anteil 100%) einen ß-Anteil von 40-95%, vorzugsweise von 50-85% (DSC) erzeugen. Der ß-Anteil wird aus dem DSC der abgekühlten Propylenhomopolymerschmelze bestimmt. Bevorzugt ist beispielsweise ein zweikomponentiges ß-Nukleierungssystem aus Calciumcarbonat und organischen Dicarbonsäuren, welches in der DE 3610644 beschrieben ist, worauf hiermit ausdrücklich Bezug genommen wird. Besonders vorteilhaft sind Calciumsalze der Dicarbonsäuren, wie Calciumpimelat oder Calciumsuberat wie in DE 4420989 beschrieben, auf die ebenfalls ausdrücklich Bezug genommen wird. Auch die in EP-0557721 beschriebenen Dicarboxamide, insbesondere N,N-Dicyclohexyl-2,6-Naphtalendicarboxamide, sind geeignete ß-Nukleierungsmittel.

Zusätzlich zu den ß-Nukleierungsmitteln ist die Einhaltung eines bestimmten Temperaturbereiches und Verweilzeiten bei diesen Temperaturen beim Abkühlen des unverstreckten Schmelzefilms für die Erzielung eines hohen Anteils an ß-kristallinem Polypropylen wichtig. Die Abkühlung des Schmelzefilms erfolgt vorzugsweise bei einer Temperatur von 60 bis 140°C, insbesondere 80 bis 130°C, beispielsweise 85 bis 120°C. Eine langsame Abkühlung fördert das Wachstum der ß-Kristallite ebenfalls, daher sollte die Abzugsgeschwindigkeit, d.h. die Geschwindigkeit mit welcher der Schmelzefilm über die erste Kühlwalze läuft, langsam sein, damit die notwendigen Verweilzeiten bei den gewählten Temperaturen ausreichend lange sind. Die Abzugsgeschwindigkeit beträgt vorzugsweise weniger als 25 m/min, insbesondere 1 bis 20 m/min.

Die poröse Schicht enthält im allgemeinen 45 bis <100 Gew.-%, vorzugsweise 50 bis 95 Gew.-%, Propylenhomopolymere und/oder Propylenblockcopolymer und 0,001 bis 5 Gew.-%, vorzugsweise 50 - 10.000 ppm mindestens eines ß-Nukleierungsmittels, bezogen auf das Gewicht der porösen Schicht. Für den Fall, daß weitere Polyolefine in der Schicht enthalten sind, wird der Anteil des Propylenhomopolymeren oder des Blockcopolymeren entsprechend reduziert. Im allgemeinen wird die Menge der zusätzlichen Polymeren in der Schicht 0 bis <10 Gew.-%, vorzugsweise 0 bis 5 Gew.-%, insbesondere 0,5 bis 2 Gew.-% betragen, wenn diese zusätzlich enthalten sind. In gleicher Weise gilt, daß der besagte Propylenhomopolymer oder Propylenblockcopolymer Anteil reduziert wird, wenn höhere Mengen von bis zu 5 Gew.-% Nukleierungsmittel eingesetzt werden. Zusätzlich kann die Schicht übliche Stabilisatoren und Neutralisationsmittel, sowie gegebenenfalls weitere Additive, in den üblichen geringen Mengen von unter 2 Gew.-% enthalten.

In einer bevorzugten Ausführungsform ist die poröse Schicht aus einer Mischung aus Propylenhomopolymer und Propylenblockcopolymer aufgebaut. Die poröse Schicht enthält in diesen Ausführungsformen im allgemeinen 50 bis 85 Gew.-%, vorzugsweise 60 bis 75 Gew.-%, Propylenhomopolymere und 15 bis 50 Gew.-% Propylenblockcopolymere, vorzugsweise 25 bis 40 Gew.-%, und 0,001 bis 5 Gew.-%, vorzugsweise 50 bis 10.000 ppm mindestens eines ß-Nukleierungsmittels, bezogen auf das Gewicht der Schicht, sowie gegebenenfalls die bereits erwähnten Additive wie Stabilisatoren und Neutralisationsmittel. Auch hier gilt, daß weitere Polyolefine in einer Menge von 0 bis <10 Gew.-%, vorzugsweise 0 bis 5 Gew.-%, insbesondere 0,5 bis 2 Gew.-% enthalten sein können, und der Anteil des Propylenhomopolymeren oder des Blockcopolymeren dann entsprechend reduziert wird.

Besonders bevorzugte Ausführungsformen der erfindungsgemäßen mikroporösen Folie enthalten 50 bis 10.000ppm, vorzugsweise 50 bis 5000ppm, insbesondere 50 bis 2000ppm Calcium-Pimelat oder Calcium-Suberat als ß-Nukleierungsmittel In der porösen Schicht.

Die mikroporöse Membranfolie kann ein oder mehrschichtig sein. Die Dicke der Membranfolie liegt im allgemeinen in einem Bereich von 10 bis 100 $\mu$m, vorzugsweise 15 bis 60 $\mu$m, beispielsweise 15 bis 40$\mu$m. Die mikroporöse Folie kann mit einer Corona, Flamm- oder Plasmabehandlung versehen werden, um die Befüllung mit Elektrolyten zu verbessern.

In einer mehrschichtigen Ausführungsform umfaßt die Folie weitere poröse Schichten, welche wie vorstehend beschrieben aufgebaut sind, wobei die Zusammensetzung der verschiedenen porösen Schicht nicht unbedingt identisch sein muß.

Die Dichte der mikroporösen Folie liegt im allgemeinen in einem Bereich von 0,1 bis 0,6 g/cm$^3$, vorzugsweise 0,2 bis 0,5 g/cm$^3$. Für die Verwendung der Folie als Separator in Doppelschichtkondensatoren sollte die Folie einen Gurley Wert von <400s aufweisen. Der Bubble point der Folie sollte nicht über 350nm, vorzugsweise im Bereich von 50 bis 300nm liegen und der mittlere Porendurchmesser sollte im Bereich 50 bis 100 nm, bevorzugt im Bereich 60 - 80 nm liegen.

Die Folie hat in Längsrichtung bei 100° und 1 Stunde eine Längsschrumpf von < 5%, vorzugsweise 0,5 bis 4%, insbesondere 1 bis 3% und in Querrichtung einen Schrumpf bei 100°C und 1 Stunde von <10%, vorzugsweise 0,5 bis 6%, insbesondere 1 bis 4%. Die Folien sollen eine Reissfestigkeit von >10 N/mm$^2$, bevorzugt > 30 N/mm$^2$ in Quer- und Längsrichtung betragen.

Die vorliegende Erfindung betrifft weiterhin ein Verfahren zur Herstellung der porösen Folie. Nach diesem Verfahren wird die poröse Folie vorzugsweise nach dem an sich bekannten Flachfolien-Coextrusionsverfahren hergestellt. Im Rahmen dieses Verfahrens wird so vorgegangen, daß die Mischung aus Propylenhomopolymer und/oder Propylenblockcopolymer und ß-Nukleierungsmittel der jeweiligen Schicht vermischt, in einem Extruder aufgeschmolzen und gegebenenfalls gemeinsam und gleichzeitig durch eine Flachdüse auf eine Abzugswalze extrudiert oder coextrudiert wird/werden, auf der sich der ein- oder mehrschichtige Schmelzefilm unter Ausbildung der ß-Kristallite verfestigt und abkühlt. Die Abkühltemperaturen und Abkühlzeiten werden so gewählt, daß ein möglichst hoher Anteil an ß-kristallinem Polypropylen in der Vorfolie entsteht. Im allgemeinen beträgt diese Temperatur der Abzugswalze oder der Abzugswalzen 60 bis 135°C, vorzugsweise 80 bis 130°C. Die Verweilzeit bei dieser Temperatur kann variieren und sollte mindestens 20 bis 300s, vorzugsweise 30 bis 100s betragen. Die so erhaltene Vorfolie enthält im allgemeinen einen Anteil an ß-Kristalliten von 40 - 95%, vorzugsweise 50 - 85%.

Diese Vorfolie mit einem hohen Anteil an ß-kristallinem Polypropylen wird anschließend derart biaxial gestreckt, daß es bei der Verstreckung zu einer Umwandlung der ß-Kristallite in $\alpha$-kristallines Polypropylen und zur Ausbildung einer netzwerkartigen porösen Struktur kommt. Die biaxiale Streckung (Orientierung) wird im allgemeinen aufeinanderfolgend durchgeführt werden, wobei vorzugsweise zuerst längs (in Maschinenrichtung) und dann quer (senkrecht zur Maschinenrichtung) gestreckt wird.

Für die Verstreckung in Längsrichtung wird die abgekühlte Vorfolie zunächst über eine oder mehrere Aufheizwalzen geführt, welche die Folie auf die geeignete Temperatur erwärmen. Im allgemeinen beträgt diese Temperatur weniger als 140°C, vorzugsweise 70 bis 120°C. Das Längsstrecken erfolgt dann im allgemeinen mit Hilfe zweier entsprechend dem angestrebten Streckverhältnis verschieden schnelllaufender Walzen. Das Längs-Streckverhältnis liegt dabei in einem Bereich von 2:1 bis 5:1, vorzugsweise 3:1 bis 4,5:1. Nach dieser Verstreckung wird die Folie zunächst wieder über entsprechend temperierte Walzen abgekühlt. Es ist in einer Ausführungsform des erfindungsgemäßen Verfahrens besonders vorteilhaft die Folie nach der Längsstreckung nur geringfügig abzukühlen, in dem man diese Kühlwalzen bei einer Temperatur von über 80°C, vorzugsweise bei einer Temperatur von 85 - 130°, insbesondere bei 90 - 120°C hält. Aus diesen angegebenen Bereichen wird bevorzugt eine Temperatur gewählt, die 5 - 20°C, vorzugsweise 10 - 15°C unter der Längsstrecktemperatur liegt. Hierbei sollte die längsgestreckte Folie eine ausreichend lange Verweilzeit bei dieser erhöhten Temperatur erfahren, beispielsweise von 30 bis 60s, vorzugsweise 35 bis 55s. Anschließend erfolgt in den sogenannten Aufheizfeldern wieder eine Erwärmung auf die Querstrecktemperatur, die im allgemeinen bei einer Temperatur von 120 - 145°C liegt. Anschließend erfolgt das Querstrecken mit Hilfe eines entsprechenden Kluppenrahmens, wobei das Querstreckverhältnis in einem Bereich von 2:1 bis 9:1, vorzugsweise 3:1 - 8:1 liegt.

Gegebenenfalls wird nach der biaxialen Streckung eine Oberfläche der Folie nach einer der bekannten Methoden corona-, plasma- oder flammbehandelt. Abschließend erfolgt in einer weiteren erfindungsgemäß Variante des Herstellverfahrens eine Thermofixierung (Wärmebehandlung), wobei die Folie etwa 5 bis 500s, vorzugsweise 10 bis 300s lang bei einer Temperatur von 120 bis 150°C, vorzugsweise bei 130 bis 145°C gehalten wird, beispielsweise über Walzen oder einen Luftheizkasten. Zum Schluß wird die Folie in üblicher Weise mit einer Aufwickeleinrichtung aufgewickelt.

Gegebenfalls wird die Folie unmittelbar vor oder während der Thermofixierung konvergierend gefahren, wobei die Konvergenz vorzugsweise 5 - 25%, insbesondere 8 bis 20% beträgt. Unter Konvergenz versteht man ein leichtes Zusammenfahren des Querstreckrahmens, so daß die maximale Breite des Rahmens die am Ende des Querstreckprozeßes gegeben ist größer als die Breite am Ende der Thermofixierung ist. Entsprechendes gilt selbstverständlich für die Breite der Folienbahn. Der Grad des Zusammenlaufens des Querstreckrahmens wird als Konvergenz angegeben, die aus der maximalen Breite des Querstreckrahmens $B_{max}$ und der Endfolienbreite $B_{Folie}$ nach der folgenden Formel berechnet wird:

$$\text{Konvergenz } [\%] = 100 \times (B_{max} - B_{Folie}) / B_{max}$$

Die Verfahrensbedingungen bei dem erfindungsgemäßen Verfahren zur Herstellung der porösen Folien unterscheiden sich von den Verfahrensbedingungen, die üblicherweise bei der Herstellung einer biaxial orientierten Folie eingehalten werden. Für die Erzielung einer hohen Porosität sind sowohl die Abkühlbedingungen bei der Verfestigung zur Vorfolie, als auch die Temperaturen und die Faktoren bei der Verstreckung kritisch. Zunächst muß durch entsprechend langsame und moderate Abkühlung, d.h bei vergleichsweise hohen Temperaturen, ein hoher Anteil an ß-Kristalliten in der Vorfolie erzielt werden. Bei der anschließende Längsverstreckung werden die ß-Kristalle in die alpha Modifikation umgewandelt, wodurch Störstellen in Form von Mikrorissen entstehen. Damit diese Störstellen in ausreichender Anzahl und in der richtigen Form entstehen muß die Längsstreckung bei vergleichsweise niedrigen Temperaturen erfolgen. Entsprechendes gilt für die Temperatur bei der Querstreckung, durch die die Störstellen zu Poren aufgerissen werden, so daß die charakteristische Netzwerkstruktur dieser porösen Folien entsteht.

Diese, gegenüber herkömmlichen boPP Prozeßen niedrigen Temperaturen bei der Längs- und Querstreckung, bedingen hohe Streckkräften, die zum einen die Abrißgefahr erhöhen und zum anderen eine hohe Orientierung in die Polymermatrix einbringen. Der Prozeß wird daher um so kritischer je höher die Porosität der Folie sein soll. Gleichzeitig verursacht eine hohe Orientierung der Polymermatrix einen hohen Schrumpf der Folie.

Aus diesen Gründen geht für eine ß-poröse Folie eine hohe Porosität zwangsläufig mit hohen Schrumpfwerten einher. Je höher die gewünschte Porosität, um so niedriger müssen die Temperaturen bei der Verstreckung und um so höher müssen die Streckfaktoren sein. Beide Faktoren bewirken zwangsläufig eine weiter Erhöhung des Schrumpfes.

Im Rahmen der vorliegenden Erfindung wurde gefunden, daß es dennoch möglich ist eine Folie mit hohen Porositäten und niedrigem Schrumpf herzustellen, wenn man eine oder mehrere der vorstehend beschriebenen Maßnahmen ergreift, vorzugsweise wenn die Folie nach ihrer biaxialen Verstreckung einer Thermofixierung bei hohen Temperaturen unterwirft. Überraschenderweise beeinträchtigt eine derartige Wärmebehandlung die Porosität nur unwesentlich, so daß die wärmebehandelte Folie auch nach dieser Maßnahme noch immer die gewünschte hohe Porosität aufweist. Überraschenderweise ist es möglich den Schrumpf durch eine hinreichend hohe Temperatur bei dieser Wärmebehandlung soweit abzubauen, daß er bis zu 80% weniger beträgt als vor dieser Wärmebehandlung, bzw. als durch eine Wärmebehandlung bei niedrigerer Temperatur. Es wurde gefunden, daß der Schrumpf um so weiter abgebaut werden kann je länger die Folie bei der entsprechenden Temperatur gehalten wird. Somit ist es auch alternativ oder ergänzend möglich durch entsprechend lange Fixierfelder die Verweilzeit bei der jeweiligen Temperatur zu erhöhen und dadurch den Schrumpf der Folie zu emiedrigen. Des weiteren unterstützt eine konvergierende Führung der Folie im Bereich der Thermofixierung den Abbau des Schrumpfes zusätzlich.

Es wurde darüber hinaus eine weitere alternative oder zusätzliche Verfahrensmaßnahmen gefunden, die eine ähnliche Reduktion des hohen Schrumpfes bewirkt, bzw. zu einer Schrumpfreduktion zusätzlich beiträgt, ohne die hohe Porosität zu beeinträchtigen. Beispielsweise erhält man auch Folien mit niedrigem Schrumpf und hohen Porositäten, wenn die Kühlwalze nach der Längsstreckung eine hohe Temperatur von beispielsweise über 80°C aufweist und die Folie hinreichend lange bei dieser Temperatur gehalten wird.

Gegebenenfalls könne die vorstehend beschriebenen Maßnahmen auch in geeigneter Weise miteinander kombiniert werden. Das erfindungsgemäße Verfahren ermöglicht somit die Herstellung einer neuen porösen Folie, die Schrumpfwerte aufweist, welche in Verbindung mit den hohen Porositäten von unter 400s bisher nicht darstellbar waren. Damit kann eine Folie zur Verfügung gestellt werden, die sich auf Grund der hohen Durchlässigkeiten für die Anwendung in DSK eignet und gleichzeitig die Anforderungen an die niedrigen Schrumpfwerte erfüllt. Die poröse Folie zeigt wesentliche Vorteile gegenüber Papierseparatoren oder Vliesen. Neben den hohen Porositäten und den niedrigen Schrumpfwerten zeichnet sich die mikroporöse Folie durch ein deutlich bessere mechanische Festigkeit aus.

Bei Verwendung der erfindungsgemäßen Folie als Separator in einem DSK kann die Aktivkohle, bzw. die Aktivkohlebeschichtung der Elektroden vor dem Befüllen mit dem Elektrolyten unter den üblichen Bedingungen vollständig getrocknet werden. Die erfindungsgemäße Folie bleibt bei diesen Bedingungen dimensionsstabil und führt nicht durch unerwünschte Schrumpfungen zu den beschriebenen Defekten infolge der thermischen Belastungen während des Produktionsprozesses des DSK. Es zeigen sich keine Ausfälle nach dem Anschweißen der Kontaktdrähte an den befüllten Wickel, was gleichfalls auf die ausgezeichnete Dimensionsstabilität der Folie zurückgeführt wird.

Zur Charakterisierung der Rohstoffe und der Folien wurden die folgenden Meßmethoden benutzt:

Schmelzflußindex

Der Schmelzflußindex der Propylenpolymeren wurde nach DIN 53 735 bei 2,16 kg Belastung und 230 °C gemessen.

Schmelzpunkt

Der Schmelzpunkt ist im Sinne der vorliegenden Erfindung das Maximum der DSC Kurve. Zur Bestimmung des Schmelzpunkts wird eine DSC-Kurve mit einer Aufheiz- und Abkühlgeschwindigkeit von 10K/1min im Bereich von 20 bis 200°C aufgenommen. Für die Bestimmung des Schmelzpunkts wird wie üblich die zweite Aufheizkurve nachdem mit 10K/1min im Bereich von 200 bis 20°C abgekühlt wurde ausgewertet.

ß-Gehalt der Vorfolie

Die Bestimmung des ß-Gehaltes der Vorfolie erfolgt ebenfalls über eine DSC-Messung, die an der Vorfolie folgendermaßen durchgeführt wird: Die Vorfolie wird in der DSC zunächst mit einer Aufheizrate von 10K/min auf 220°C erhitzt und aufgeschmolzen und wieder abgekühlt Aus der 1.Aufheizkurve wird der Kristallinitätsgrad $K_{\text{ß, DSC}}$ als Verhältnis der Schmelzenthalpien der ß-kristallinen Phase ($H_\text{ß}$) zu der Summe der Schmelzenthalpien von ß- und $\alpha$-kristalliner Phase ($H_\text{ß} + H_\alpha$) bestimmt.

$$K_{\text{ß,DSC}} \,[\%] = 100 \times H_\text{ß} / (H_\text{ß} + H_\alpha)$$

Dichte

Die Dichte wird nach DIN 53 479, Verfahren A, bestimmt.

Porosität

Als Porosität wird die Dichtereduzierung ($\rho_{\text{Sep}} - \rho_{\text{pp}}$) der Separatorfolie gegenüber der Dichte des reinen Polypropylens $\rho_{\text{pp}}$ wie folgt berechnet:

$$\text{Porosität [\%]} = 100 \times (\rho_{Sep} - \rho_{pp}) / \rho_{pp}$$

Permeabilität (Gurley-Wert)

Die Permeabilität der Folien wurde mit dem Gurley Tester 4110, nach ASTM D 726-58 gemessen. Dabei wird die Zeit (in sec) bestimmt die 100 $cm^3$ Luft benötigen, um durch die Etikettenfläche von 1 $Inch^2$ (6,452 $cm^2$) zu permeieren. Die Druckdifferenz über der Folie entspricht dabei dem Druck einer Wassersäule von 12,4 cm Höhe. Die benötigte Zeit entspricht dann dem Gurley-Wert.

Schrumpf:

Die Längs- und Querschrumpfwerte beziehen sich auf die jeweilige Längenausdehnung der Folie (längs $L_0$ und quer $Q_0$) vor dem Schrumpfprozeß. Die Längsrichtung ist die Maschinenrichtung, als Querrichtung wird entsprechend die Richtung quer zum Maschinenlauf definiert. Der Probekörper von 10*10$cm^2$ wird im Umluftofen bei der jeweiligen Temperatur (100°C) über eine Dauer von 60 min geschrumpft. Anschließend werden die verbliebenen Längenausdehnungen des Probekörpers längs und quer erneut bestimmt ($L_1$ und $Q_1$). Als Schrumpf in % wird dann die Differenz der ermittelten Längenausdehnungen im Verhältnis zur ursprünglichen Länge $L_0$ und $Q_0$ mal 100 angegeben.

$$\textit{Längsschrumpf } L_s[\%] = \frac{L_0 - L_1}{L_0} * 100[\%]$$

$$\textit{Querschrumpf } Q_s[\%] = \frac{Q_0 - Q_1}{Q_0} * 100[\%]$$

Diese Bestimmungsmethode für den Längs- und Querschrumpf entspricht DIN 40634.

Die Erfindung wird nunmehr durch die nachfolgenden Beispiele erläutert.

Beispiel 1

Nach dem Extrusionsverfahren wurde aus einer Breitschlitzdüse bei einer Extrusionstemperatur von jeweils 240 bis 250°C **°C** eine einschichtige Vorfolie extrudiert. Diese Vorfolie wurde zunächst auf einer Kühlwalze abgezogen und abgekühlt, Anschließend wurde die Vorfolie auf die Längsstrecktemperatur erwärmt und über verschieden schnelllaufende Walzen längsgestreckt. Danach wird die Folie über Kühlwalzen gefahren und abgekühlt. Anschließend wird die Folie in die Aufheizfeder des Querstreckrahmens geführt, auf die Querstrecktemperatur aufgeheizt und in Querrichtung orientiert. Nach dieser Querorientierung erfolgt die Thermofixierung, bei der Folie konvergierend gefahren wird. Die Folie hatte die folgende Zusammensetzung:

ca. 80 Gew.-% hochisotaktisches Propylenhomopolymerisat (PP) mit einer $^{13}$C-NMR Isotaktizität von 97% und einem n-heptanlöslichen Anteil von 2,5 Gew.-% (bezogen auf 100% PP) und einem Schmelzpunkt von 165°C; und einem Schmelzflußindex von 2,5 g/10 min bei 230 °C und 2,16 kg Belastung (DIN 53 735) und

ca. 20 Gew.-% Propylen-Ethylen-Blockcopolymerisat mit einem Ethylenanteil von 5 Gew.-% bezogen auf das Blockcopolymer und einem MFI (230°C und 2,16 kg) von 6 g/10min und einem Schmelzpunkt (DSC) von 165°C eingesetzt und 0,04 Gew.-% Ca-Pimelat als ß-Nukleierungsrnittel.

Die Folie enthielt zusätzlich in beiden Schichten Stabilisator und Neutralisationsmittel in üblichen geringen Mengen.

Im einzelnen wurde die folgenden Bedingungen und Temperaturen bei der Herstellung der Folie gewählt:

| | |
|---|---|
| Extrusion: | Extrusionstemperatur 235 °C |
| Abzugswalze: | Temperatur 125°C, |
| Abzugsgeschwindigkeit: | 4m/min |
| Längsstreckung: | Streckwalze T = 90 °C |
| Längsstreckung um den | Faktor 3.0 |
| Temperatur der Kühlwalze nach Längsstreckung: | 90°C |

(fortgesetzt)

| Verweilzeit auf Kühlwalze: | 40s |
| Querstreckung: | Aufheizfelder T = 125 °C |
| Streckfelder | T = 125 °C |
| Querstreckung um den | Faktor 5,0 |
| Fixierung: | T = 140 °C |
| Konvergenz | 15% |
| Verweilzeit im Fixierfeld: | 20s |

Die so hergestellte poröse Folie war ca. 25 $\mu$m dick. Die Folie wies eine Dichte von 0,34 g/cm$^3$ auf und zeigte ein gleichmäßiges weiß-opakes Aussehen.

Beispiel 2

Es wurde eine Folie wie in Beispiel 1 beschrieben hergestellt. Im Unterschied zu Beispiel 1 wurde in der Thermofixierung die Konvergenz von 15% auf 10% abgesenkt. Im übrigen wurde die Zusammensetzung der Folie nicht geändert und die übrigen Verfahrensbedingungen wurden beibehalten.

Beispiel 3

Es wurde eine Folie wie in Beispiel 2 beschrieben hergestellt. Im Unterschied zu Beispiel 2 wurde die Temperatur der Kühlwalze nach der Längsstreckung von 90°C auf 110°C erhöht. Im übrigen wurde die Zusammensetzung der Folie nicht geändert und die übrigen Verfahrensbedingungen wurden beibehalten.

Beispiel 4

Es wurde eine Folie wie in Beispiel 2 beschrieben hergestellt. Im Unterschied zu Beispiel 2 wurde die Temperatur in der Fixierung von 140°C auf 145°C erhöht. Im übrigen wurde die Zusammensetzung der Folie nicht geändert und die übrigen Verfahrensbedingungen wurden beibehalten.

Beispiel 5

Es wurde eine Folie wie in Beispiel 2 beschrieben hergestellt. Im Unterschied zu Beispiel 2 wurde die Fixierzeit durch Beheizung eines weiteren Segmentes des Fixierfeldes von 20s auf 40s verlängert. Im übrigen wurde die Zusammensetzung der Folie nicht geändert und die übrigen Verfahrensbedingungen wurden beibehalten.

Beispiel 6

Es wurde eine Folie wie in Beispiel 2 beschrieben hergestellt. Im Unterschied zu Beispiel 2 wurde eine Folie mit einer Dicke von 40$\mu$m hergestellt. Im übrigen wurde die Zusammensetzung der Folie nicht geändert und die übrigen Verfahrensbedingungen wurden beibehalten.

Vergleichsbeispiel 1

Es wurde eine Folie wie in Beispiel 2 beschrieben hergestellt. Im Unterschied zu Beispiel 2 wurde die Temperatur in der Fixierung von 140°C auf 110°C abgesenkt. Im übrigen wurde die Zusammensetzung der Folie nicht geändert und die übrigen Verfahrensbedingungen wurden beibehalten.

Vergleichsbeispiel 2

Es wurde eine Folie wie in Beispiel 2 beschrieben hergestellt. Im Unterschied zu Beispiel 2 wurde die Temperatur in der Fixierung von 140°C auf 90°C abgesenkt. Im übrigen wurde die Zusammensetzung der Folie nicht geändert und die übrigen Verfahrensbedingungen wurden beibehalten.

Vergleichsbeispiel 3

Es wurde eine Folie wie in Beispiel 2 beschrieben hergestellt. Im Unterschied zu Beispiel 2 wurde die Temperatur der Längsstreckung von 90°C auf 120°C erhöht. Im übrigen wurde die Zusammensetzung der Folie nicht geändert und die übrigen Verfahrensbedingungen wurden beibehalten.

Vergleichsbeispiel 4

Es wurde eine Folie wie in Beispiel 2 beschrieben hergestellt. Im Unterschied zu Beispiel 2 wurde die Temperatur in der Querstreckung, von 125°C auf 155°C erhöht. Im übrigen wurde die Zusammensetzung der Folie nicht geändert und die übrigen Verfahrensbedingungen wurden beibehalten.

Die Eigenschaften der Folien nach Beispielen und den Vergleichsbeispielen sind in der nachstehenden Tabelle zusammengefaßt. Es zeigt sich, daß nur die Folien, die nach dem erfindungsgemäßen Verfahren hergestellt sind die gewünschte Eigenschaftskombination hohe Porosität und niedriger Schrumpf aufweißt, wohingegen andere Maßnahmen zur Absenkung des Schrumpfes die Porosität gleichzeitig erheblich beeinträchtigen. Daher sind nur die Folien nach den erfindungsgemäßen Beispielen für den Einsatz in DSK geeignet.

Tabelle

| | Dicke [µm] | Dichte [g/cm³] | Porosität [%] | Gurley [s] | T[°C] Kühlwalze MD | Zeit [s] Kühlwalze MD | T[°C] Fixierung | Zeit [s] Fixierung | Konvergenz [%] | Schrumpf MD [%] 1h@100°C | Sehrumpf TD [%] 1h@100°C | Pin holes |
|---|---|---|---|---|---|---|---|---|---|---|---|---|
| Bsp. 1 | 25 | 0,34 | 63 | 150 | 90 | 40 | 140 | 20 | 15 | 2,7 | 1,2 | Nein |
| Bsp. 2 | 25 | 0,33 | 64 | 140 | 90 | 40 | 140 | 20 | 10 | 2,2 | 3,2 | Nein |
| Bsp.3 | 25 | 0,34 | 63 | 150 | 110 | 40 | 140 | 20 | 10 | 1,4 | 3,0 | Nein |
| Bsp. 4 | 25 | 0,34 | 63 | 158 | 90 | 40 | 145 | 20 | 10 | 2,0 | 2,5 | Nein |
| Bsp. 5 | 25 | 0,26 | 72 | 95 | 90 | 40 | 140 | 40 | 5 | 2,2 | 3,3 | Nein |
| Bsp. 6 | 40 | 0,33 | 64 | 160 | 90 | 40 | 140 | 20 | 10 | 3,7 | 3,6 | Nein |
| VB 1 | 25 | 0,32 | 60 | 140 | 90 | 40 | 110 | 20 | 10 | 6,2 | 10,5 | Ja |
| VB 2 | 25 | 0,32 | 60 | 130 | 90 | 40 | 90 | 20 | 10 | 10,1 | 24 | Ja |
| VB 3 | 25 | 0,45 | 51 | 950 | 90 | 40 | 110 | 20 | 10 | 4,2 | 6,3 | |
| VB 4 | 25 | 0,6 | 36 | 2400 | 90 | 40 | 110 | 20 | 10 | 3,8 | 4,5 | |

**Patentansprüche**

1. Biaxial orientierte, ein- oder mehrschichtige poröse Folie, welche mindestens eine poröse Schicht umfaßt, wobei diese Schicht Propylenhomopolymer und/oder Propylen-Blockcopolymer und ß-Nukleierungsmittel umfaßt, **dadurch gekennzeichnet, daß** die Folie einen Gurley Wert von 50 bis 400s und in Längsrichtung bei 100°C/1 Stunde einen Schrumpf von <5% und einen Querschrumpf bei 100°C/1 Stunde von <10% aufweist und eine Reißfestigkeit von >30 N/mm$^2$ in Quer- und Längsrichtung hat.

2. Folie nach Anspruch 1, **dadurch gekennzeichnet, daß** das Propylenhomopolymere ein hochisotaktisches Polypropylen mit einer Kettenisotaxie (13C-NMR) von 96 bis 99% ist.

3. Folie nach Anspruch 1 oder 2, **dadurch gekennzeichnet, daß** das Propylenhomopolymere ein isotaktisches Polypropylen mit einer Kettenisotaxie (13C-NMR) von 90 bis <96% ist.

4. Folie nach einem der Ansprüche 1 bis 3, **dadurch gekennzeichnet, daß** das Nukleierungsmittel ein Calciumsalz der Pimelinsäure oder der Suberinsäure oder ein Carboxamid ist.

5. Folie nach einem der Ansprüche 1 bis 4, **dadurch gekennzeichnet, daß** die Folie isotaktisches Propylenhomopolymer und Propylen-Blockcopolymer mit einem Comonomer-Gehalt zwischen 1 und 20 Gew.% und ß-Nukleierungsmittel umfasst.

6. Folie nach Anspruch 5, **dadurch gekennzeichnet, daß** die Folie 50 bis 85 Gew.-% Propylenhomopolymer, 15 bis 50 Gew.-% Propylen-Blockcopolymer und 50 bis 10.000 ppm ß-Nukleierungsmittel umfasst.

7. Folie nach einem der Ansprüche 1 bis 6, **dadurch gekennzeichnet, daß** die Dichte der Folie in einem Bereich 0,1 bis 0,5 g/cm$^3$ liegt und/oder die poröse Schicht einen mittleren Porendurchmesser im Bereich von 50 bis 100 nm hat.

8. Folie nach einem der Ansprüche 1 bis 7, **dadurch gekennzeichnet, daß** das die Folie eine Dicke von 10 bis 100$\mu$m aufweist und/oder die poröse Schicht einen mittleren Porendurchmesser im Bereich von 50 bis 100 nm hat.

9. Folie nach einem der Ansprüche 1 bis 8, **dadurch gekennzeichnet, dass** sie ein E-Modul in Längsrichtung von 300 bis 1800 N/mm$^2$ und in Querrichtung ein E-Modul von 500 bis 3000 N/mm$^2$ hat.

10. Folie nach einem der Ansprüche 1 bis 9, **dadurch gekennzeichnet, dass** die Porosität der porösen Schicht durch Umwandlung von ß-kristallinem Polypropylen beim Verstrecken der Folie erzeugbar ist.

11. Folie nach einem der Ansprüche 1 bis 10, **dadurch gekennzeichnet, dass** das ß-Nukleierungsmittel beim Abkühlen einer Propylenhomopolymerschmelze (PP-Anteil 100%) einen ß-Anteil von 40-95% erzeugen kann.

12. Folie nach einem der Ansprüche 1 bis 11, **dadurch gekennzeichnet**, das die Folie einschichtig ist.

13. Doppelschichtkondensator umfassend eine Folie nach einem der Ansprüche 1 bis 12 als Separator.

14. Doppelschichtkondensator nach Anspruch 13, umfassend Aktivkohle oder aktivkohlebeschichtete Elektroden.

**Claims**

1. A biaxially oriented, single- or multi-layered porous film, which comprises at least one porous layer, wherein this layer comprises propylene homopolymer and/or propylene block copolymer and β-nucleation agent, **characterised in that** the film has a Gurley value of 50 to 400 s and shrinkage in the longitudinal direction of < 5 % at 100 °C/1 hour, and a transverse shrinkage at 100°C/1 hour of < 10 %, and has a tear strength of > 30 N/mm$^2$ in the transverse and longitudinal direction.

2. The film according to Claim 1, **characterised in that** the propylene homopolymer is a highly isotactic polypropylene with chain isotaxy (13C-NMR) of 96 to 99 %.

3. The film according to Claim 1 or 2, **characterised in that** the propylene homopolymer is an isotactic polypropylene with chain isotaxy (13C-NMR) of 90 to < 96 %.

4. The film according to one of Claims 1 to 3, **characterised in that** the nucleation agent is a calcium salt of pimelic acid or suberic acid or is a carboxamide.

5. The film according to one of Claims 1 to 4, **characterised in that** the film comprises isotactic propylene homopolymer and propylene block copolymer having a comonomer content between 1 and 20 % by weight, and β-nucleation agent.

6. The film according to Claim 5, **characterised in that** the film comprises 50 to 85 % by weight propylene homopolymer, 15 to 50 % by weight propylene block copolymer, and 50 to 10,000 ppm β-nucleation agent.

7. The film according to one of Claims 1 to 6, **characterised in that** the density of the film lies in a range of 0.1 to 0.5 g/cm$^3$ and/or the porous layer has a mean pore diameter in the range of 50 to 100 nm.

8. The film according to one of Claims 1 to 7, **characterised in that** the film has a thickness of 10 to 100 $\mu$m and/or the porous layer has a mean pore diameter in the range of 50 to 100 nm.

9. The film according to one of Claims 1 to 8, **characterised in that** it has a modulus of elasticity in the longitudinal direction of 300 to 1800 N/mm$^2$ and has a modulus of elasticity in the transverse direction of 500 to 3000 N/mm$^2$.

10. The film according to one of Claims 1 to 9, **characterised in that** the porosity of the porous layer can be produced by conversion of β-crystalline polypropylene as the film is stretched.

11. The film according to one of Claims 1 to 10, **characterised in that** the β-nucleation agent can produce a β-proportion of 40-95 % as a propylene homopolymer melt (PP proportion 100%) is cooled.

12. The film according to one of Claims 1 to 11, **characterised in that** the film is single-layered.

13. A double-layer capacitor comprising a film according to one of Claims 1 to 12 as separator.

14. The double-layer capacitor according to Claim 13, comprising activated carbon or electrodes coated with activated carbon.


**Revendications**

1. Feuille poreuse mono- ou multicouche biaxialement orientée, comprenant au moins une couche poreuse, ladite couche comprenant de l'homopolymère de propylène et/ou du copolymère de propylène à blocs et de l'agent de nucléation β, **caractérisée en ce que** ladite feuille présente un indice de Gurley compris entre 50 et 400 s et, à 100°C / 1 heure, un retrait < 5 % dans le sens longitudinal et, à 100°C / 1 heure, un retrait transversal < 10 %, et une résistance à la rupture > 30 N/mm$^2$ dans les sens transversal et longitudinal.

2. Feuille selon la revendication 1, **caractérisée en ce que** ledit homopolymère de propylène est un polypropylène hautement isotactique, l'indice d'isotacticité de sa chaîne (13C-NMR) étant compris entre 96 et 99 %.

3. Feuille selon les revendications 1 ou 2, **caractérisée en ce que** ledit homopolymère de propylène est un polypropylène hautement isotactique, l'indice d'isotacticité de sa chaîne (13C-NMR) étant compris entre 90 et < 96 %.

4. Feuille selon l'une des revendications 1 à 3, **caractérisée en ce que** ledit agent de nucléation est un sel de calcium de l'acide pimélique ou de l'acide subérique ou bien un amide d'acide carboxylique.

5. Feuille selon l'une des revendications 1 à 4, **caractérisée en ce que** ladite feuille comprend de l'homopolymère de propylène isotactique et du copolymère de propylène à blocs ayant une teneur en comonomères comprise entre 1 et 20 % en poids, et de l'agent de nucléation β.

6. Feuille selon la revendication 5, **caractérisée en ce que** ladite feuille comprend 50 à 85 % en poids d'homopolymère de propylène, 15 à 50 % en poids de copolymère de propylène à blocs, et 50 à 10 000 ppm d'agent de nucléation β.

**7.** Feuille selon l'une des revendications 1 à 6, **caractérisée en ce que** la densité de ladite feuille est comprise entre 0,1 et 0,5 g/cm$^3$ et/ou ladite couche poreuse présente un diamètre de pores moyen compris entre 50 et 100 nm.

**8.** Feuille selon l'une des revendications 1 à 7, **caractérisée en ce que** ladite feuille présente une épaisseur comprise entre 10 et 100 $\mu$m et/ou ladite couche poreuse présente un diamètre de pores moyen compris entre 50 et 100 nm.

**9.** Feuille selon l'une des revendications 1 à 8, **caractérisée en ce qu'**elle présente dans le sens longitudinal un module d'élasticité compris entre 300 et 1800 N/mm$^2$, et dans le sens transversal un module d'élasticité compris entre 500 et 3 000 N/mm$^2$.

**10.** Feuille selon l'une des revendications 1 à 9, **caractérisée en ce que** la porosité de ladite couche poreuse peut être générée, lors de l'orientation de ladite feuille, par conversion de polypropylène $\beta$-cristallin.

**11.** Feuille selon l'une des revendications 1 à 10, **caractérisée en ce que** ledit agent de nucléation $\beta$ est capable de générer, lors du refroidissement d'un bain de fusion d'homopolymère de propylène (proportion de PP 100 %), une proportion $\beta$ comprise entre 40 et 95 %.

**12.** Feuille selon l'une des revendications 1 à 11, **caractérisée en ce que** ladite feuille est monocouche.

**13.** Condensateur à double couche, comprenant une feuille selon l'une des revendications 1 à 12 en tant que séparateur.

**14.** Condensateur à double couche selon la revendication 13, comprenant du charbon actif ou des électrodes revêtues de charbon actif.

**EP 2 842 990 B1**

**IN DER BESCHREIBUNG AUFGEFÜHRTE DOKUMENTE**

**In der Beschreibung aufgeführte Patentdokumente**

- EP 1950821 A1
- WO 2009132801 A1
- DE 3610644
- DE 4420989
- EP 0557721 A